# FASCICULE DE BREVET EUROPEEN

(11) **EP 3 812 237 B1**
(45) Date de publication et mention de la délivrance du brevet: **16.03.2022**
(21) Numéro de dépôt: 20203405.4
(22) Date de dépôt: 22.10.2020
(51) Int. Cl.: B61F 5/30, F16F 3/06

(54) **BOGIE DE VÉHICULE FERROVIAIRE ET VÉHICULE FERROVIAIRE ASSOCIÉ**
FAHRGESTELL EINES SCHIENENFAHRZEUGS UND ENTSPRECHENDES SCHIENENFAHRZEUG
BOGIE FOR A RAIL VEHICLE AND ASSOCIATED RAIL VEHICLE

(30) Priorité: 25.10.2019 FR 1911983
(43) Date de publication de la demande: 28.04.2021
(73) Titulaire: ALSTOM Transport Technologies, 93400 Saint-Ouen (FR); SNCF Mobilités, 93200 Saint-Denis (FR)
(72) Inventeur: ITASSE, Guillaume, 71640 GIVRY (FR); CARON, Bruno, 71200 SAINT SERNIN DU BOIS (FR)
(74) Mandataire: Lavoix

(56) Documents cités:
- CN-A- 106 800 029
- FR-A1- 2 714 644
- GB-A- 169 896

## Description

La présente invention concerne un bogie de véhicule ferroviaire comprenant un châssis, au moins une roue montée mobile en rotation sur une boîte d'essieu et au moins une suspension primaire disposée entre le châssis et la boîte d'essieu, la suspension primaire étant agencée pour autoriser un débattement du châssis par rapport à la boîte d'essieu selon une direction d'élévation, la suspension primaire comprenant :
- un ressort de tare hélicoïdal d'axe sensiblement parallèle à la direction d'élévation, le ressort de tare étant comprimé entre le châssis et la boîte d'essieu ;
- un ressort de charge hélicoïdal logé à l'intérieur du ressort de tare et de même axe, le ressort de charge étant disposé entre le châssis et la boîte d'essieu ; et
- un plot s'étendant selon l'axe depuis l'un du châssis et de la boîte d'essieu.

L'invention concerne également un véhicule ferroviaire comprenant un tel bogie.

L'invention s'applique au domaine des transports, en particulier du transport ferroviaire.

Dans un bogie de véhicule ferroviaire, il est connu de suspendre le châssis du bogie par rapport aux boîtes d'essieu par l'intermédiaire de suspensions primaires s'étendant entre les boîtes d'essieu et le châssis du bogie. De telles suspensions primaires permettent d'amortir et de filtrer les déplacements verticaux entre le châssis et la boîte d'essieu produits notamment par les irrégularités de la voie sur laquelle circule le véhicule ferroviaire.

On connaît déjà, notamment d'après FR 2 714 644, un bogie ferroviaire de type précité, comprenant une suspension primaire comportant deux ressorts hélicoïdaux. Un des ressorts, dit ressort de tare, a un diamètre interne supérieur au diamètre externe du second ressort, dit ressort de charge, de sorte que le ressort de charge est logé dans le ressort de tare. Le ressort de tare reprend seul les efforts jusqu'à une charge prédéterminée au-delà de laquelle le ressort de charge devient également actif, assurant la progressivité de la raideur de la suspension.

Toutefois, une telle suspension ne donne pas entière satisfaction. En effet, lorsqu'il n'est pas chargé, le ressort de charge est susceptible de vibrer de manière parasite et d'entrer en contact brutalement avec un plateau du châssis ou de la boîte d'essieu. De tels chocs génèrent du bruit ainsi qu'une usure accélérée du ressort de charge et du plateau.

Le document CN 106 800 029 A décrit également un bogie de véhicule ferroviaire de type précipité.

Un but de l'invention est donc de proposer un bogie de véhicule ferroviaire moins bruyant, tout en améliorant la durée de vie du ressort de charge et du plateau.

A cet effet, l'invention a pour objet un bogie tel que défini ci-dessus, caractérisé en ce que la suspension primaire comprend en outre :
- un ressort de maintien hélicoïdal logé à l'intérieur du ressort de tare et de même axe que le ressort de tare et le ressort de charge ; et
- une bague montée coulissante le long du plot, la bague étant enserrée entre le ressort de charge et le ressort de maintien,
l'empilement constitué du ressort de charge, de la bague et du ressort de maintien étant comprimé entre le châssis et la boîte d'essieu.

Selon des modes de réalisation particuliers de l'invention, le bogie présente l'une ou plusieurs caractéristiques suivantes, prise(s) isolément ou suivant toute(s) combinaison(s) techniquement possible(s) :
- la bague présente un collet périphérique en saillie radialement, le ressort de charge et le ressort de maintien prenant appui d'un côté et de l'autre du collet périphérique,
- la bague présente des diamètres extérieurs différents de part et d'autre du collet périphérique,
- la bague présente un alésage traversant dans la surface duquel la bague présente au moins une gorge périphérique dans laquelle est disposé un segment, chaque segment étant en contact avec le plot,
- la bague comporte deux segments espacés axialement et le collet périphérique s'étend axialement entre les deux segments,
- la bague porte au moins un joint en contact avec le plot,
- la bague comporte une butée d'appui axial autour du plot, le ressort de maintien étant compressible jusqu'à l'appui de la butée d'appui contre une surface complémentaire ménagée autour du plot,
- le bogie comporte un plateau solidaire autour du plot, le plateau comprenant un centreur externe et un centreur interne concentriques, une extrémité du ressort de maintien étant agencée dans un logement ménagé entre le centreur externe et le centreur interne,
- le ressort de maintien présente une raideur comprise entre 0,01 % et 5,00 % de la raideur du ressort de charge.

L'invention a en outre pour objet un véhicule ferroviaire comprenant au moins un bogie tel que défini ci-dessus.

D'autres caractéristiques et avantages de l'invention apparaîtront à la lecture de la description qui va suivre, donnée uniquement à titre d'exemple et faite en se référant aux dessins annexés, dans lesquels :
[Fig 1] la figure 1 est une vue de côté d'une partie d'un bogie selon l'invention, le bogie comprenant au moins une suspension primaire ; et
[Fig 2] la figure 2 est une vue en coupe selon un plan vertical d'une partie de la suspension de la figure 1.

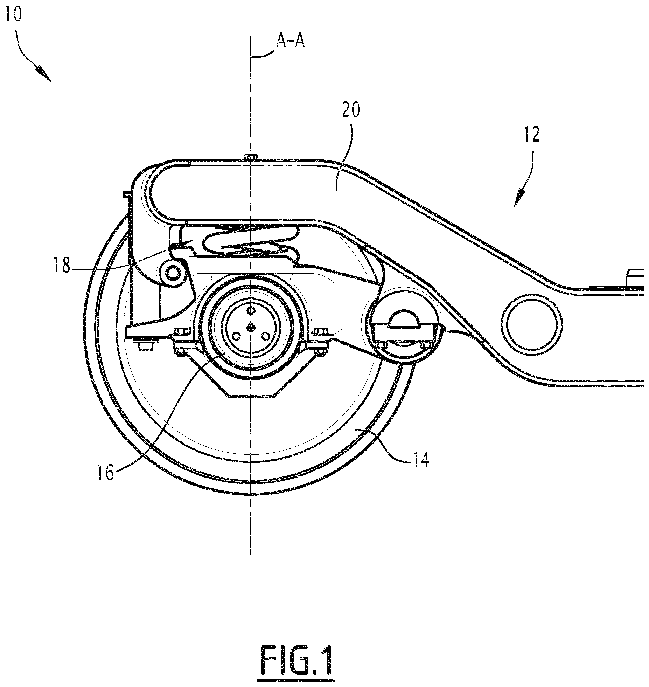

Un bogie 10 de véhicule ferroviaire est représenté sur la figure 1. Le véhicule ferroviaire est par exemple un tramway, un métro ou un train.

Le bogie 10 est destiné à porter au moins une caisse (non représentée) configurée pour recevoir des passagers et/ou des marchandises à transporter.

Le bogie 10 comprend un châssis 12, quatre roues 14 montées mobile en rotation chacune sur une boîte d'essieu 16 et une suspension primaire 18 disposée entre le châssis 12 et chaque boîte d'essieu 16.

Le châssis 12 comprend deux longerons 20 s'étendant parallèlement l'un à l'autre, selon la direction de circulation du véhicule. Les longerons 20 sont typiquement reliés l'un à l'autre par une traverse (non représentée). Les roues 14 d'un même essieu sont reliées aux longerons 20 par l'intermédiaire d'une paire de boîtes d'essieu 16 et d'une paire de suspensions primaires 18.

Chaque suspension primaire 18 est propre à assurer la suspension entre la boîte d'essieu 16 et le châssis 12 en présence de sollicitations extérieures à la suspension primaire 18. Chaque suspension primaire 18 supporte verticalement la caisse et est agencée pour autoriser un débattement selon une direction d'élévation sensiblement verticale.

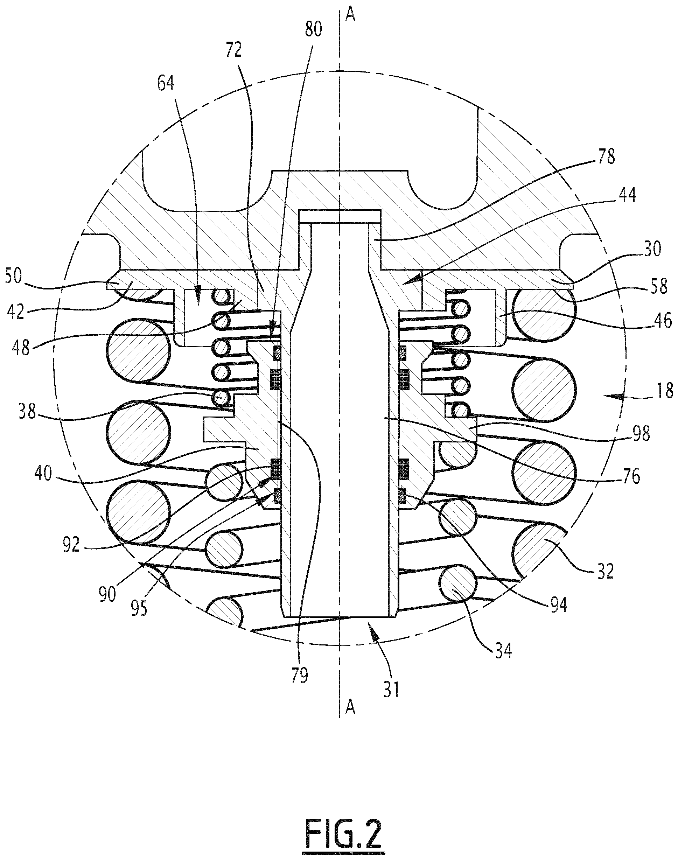

Dans le mode de réalisation représenté sur la figure 2, chaque suspension primaire 18 présente un axe A-A central.

Chaque suspension primaire 18 comprend, comme illustré sur la figure 2, au moins un plateau 30 fixé au châssis 12, un plot 31 s'étendant selon l'axe A-A depuis le châssis 12 et un ressort de tare 32 hélicoïdal d'axe A-A. Chaque suspension primaire 18 comporte en outre un ressort de charge 34 hélicoïdal et un ressort de maintien 38 hélicoïdal logés à l'intérieur du ressort de tare 32 et de même axe A-A. Ces ressorts 34, 38 sont montés de part et d'autre d'une bague 40 montée coulissante le long du plot 31.

Le ressort de tare 32 et l'ensemble constitué du ressort de charge 34, du ressort de maintien 38 et de la bague 40 s'étendent chacun entre le châssis 12 et la boîte d'essieu 16, préférentiellement entre le plateau 30 et la boîte d'essieu 16.

Le plateau 30 présente une embase 42 circulaire fixée au longeron 20 et s'étendant perpendiculairement à l'axe A-A. Le plateau 30 présente un évidement 44 central, de forme ici cylindrique. Il comprend en outre un centreur externe 46 et un centreur interne 48, qui borde l'évidement 44, d'axe central A-A. Les centreurs 46, 48 sont formés de viroles circulaires et sont venus de matière avec l'embase 42 en faisant saillie par rapport à ladite embase 42.

L'embase 42 présente ici un chanfrein 50, de sorte que l'embase 42 présente est solidaire du châssis 12 au niveau d'une face présentant un diamètre le plus petit.

Le centreur externe 46 présente un diamètre externe strictement inférieur au diamètre de l'embase 42. L'embase 42 définit ainsi un épaulement 58 autour du centreur externe 46 sur lequel s'appuie une extrémité du ressort de tare 32.

Le centreur externe 46 et le centreur interne 48 définissent entre eux un logement 64 de forme annulaire.

Le plot 31 est de révolution et s'étend en partie à l'intérieur de l'évidement 44 où il présente un collet 72 de forme complémentaire à la forme de l'évidement 44. Le plot 31 est solidaire de l'embase 42.

De préférence, le plot 31 fait saillie de part et d'autre du plateau 30. Le plot 31 comprend une portion de guidage 76 de révolution faisant saillie au-delà du plateau 30 à l'intérieur du ressort de tare 32 sur une longueur comprise entre 100 mm et 200 mm. Le plot 31 comprend en outre un tenon 78 faisant saillie de l'autre côté du collet 44 vers le châssis 12.

Le ressort de tare 32 est un ressort de compression hélicoïdal. Il est comprimé entre le châssis 12 et la boîte d'essieu 16 et prend appui d'une part sur le plateau 30 et d'autre part sur la boîte d'essieu 16.

Le ressort de tare 32 présente une raideur comprise entre 125 N/mm et 650 N/mm.

Le ressort de charge 34 est un ressort de compression hélicoïdal. Le ressort de charge 34 est disposé entre le châssis 12 et la boîte d'essieu 16. Le ressort de charge 34 prend appui d'une part sur la bague 40 et d'autre part sur la surface d'appui opposée au plateau 30.

De préférence, le ressort de charge 34 présente une raideur comprise entre 200 N/mm et 850 N/mm.

Le ressort de maintien 38 est un ressort de compression hélicoïdal. Le ressort de maintien 38 prend appui d'une part sur la bague 40 et d'autre part sur le plateau 30.

Dans le mode de réalisation représenté sur la figure 2, le ressort de maintien 38 est agencé en partie dans le logement 64 ménagé entre le centreur externe 46 et le centreur interne 48 et prend appui sur l'embase 42.

De préférence, le ressort de maintien 38 présente une raideur comprise entre 0,01 % et 5,00 % de la raideur du ressort de charge 34. Le ressort de maintien 38 est ainsi apte à réduire ou même supprimer les vibrations intempestives du ressort de charge 34, sans modifier significativement la raideur globale de la suspension primaire 18.

La bague 40 est enserrée entre le ressort de charge 34 et le ressort de maintien 38, tous deux étant maintenus comprimés.

La bague 40 est par exemple réalisée en métal ou dans un autre matériau résistant à l'usure.

La bague 40 définit un alésage traversant 79 d'axe central A-A monté coulissant autour de la portion de guidage 76 du plot 31. La bague 40 présente une butée d'appui 80 sur le plateau 30.

La bague 40 est propre à coulisser le long du plot 31 selon l'axe A-A avec un jeu réduit. Avantageusement, le ressort de maintien 38 est compressible jusqu'à l'appui de la butée d'appui 80 contre le plot 31 et/ou plateau 30. Dans le mode de réalisation représentée sur la figure 2, la butée d'appui 80 est propre à buter contre le collet 72 du plot 31 et contre l'embase 42 du plateau 30.

La surface de l'alésage 79 présente au moins une gorge 90 périphérique dans laquelle est disposé un segment 92 en contact avec le plot 31. Le segment 92 facilite le coulissement de la bague 40 le long du plot 31. Par exemple, comme représenté sur la figure 2, la surface de l'alésage 79 présente deux gorges 90 périphériques espacées axialement dans lesquelles sont disposés des segments 92.

Avantageusement, la bague 40 porte au moins un joint 94 à lèvres disposé dans une gorge 95 et en contact avec le plot 31 de manière à assurer une étanchéité entre l'alésage 79 et le plot 31, comme illustré sur la figure 2. La bague 40 comporte ici deux joints 94 à lèvres, les segments 92 étant disposés entre lesdits joints 94. En variante, les joints 94 sont des joints toriques, rectangulaires ou de toute autre nature de manière à assurer l'étanchéité entre l'alésage 79 et le plot 31.

La bague 40 présente extérieurement entre les deux segments 92 un collet périphérique 98 jouant le rôle de butée pour le ressort de charge 34 et le ressort de maintien 38 qui prennent appui d'un côté et de l'autre du collet périphérique 98.

La bague 40 présente des diamètres externes différents de part et d'autre du collet périphérique 98, de préférence adaptés aux diamètres d'enroulement et aux diamètres de fil du ressort de charge 34 et du ressort de maintien 38. Le ressort de charge 34 prend ici appui sur un épaulement du collet périphérique 98 présentant une surface plus grande que le ressort de maintien 38.

Le principe de fonctionnement d'une telle suspension primaire 18 de bogie 10 de véhicule ferroviaire va maintenant être décrit.

Lors du déplacement du véhicule ferroviaire sur une voie présentant des déformations, la suspension primaire 18 reprend les efforts appliqués par la caisse sur le bogie 10 en autorisant un débattement selon l'axe A-A entre le châssis 12 et la boîte d'essieu 16.

En deçà d'une charge à la roue prédéterminée, typiquement comprise entre 3000 kg et 8000 kg, seul le ressort de tare 32 travaille constamment et assure la suspension verticale entre le châssis 12 et la boîte d'essieu 16.

La butée d'appui 80 de la bague 40 est alors à l'écart du plateau 30. La bague 40 est comprimée entre le ressort de charge 34 et le ressort de maintien 38 qui travaillent de manière concurrente, de façon à réduire les vibrations parasites du ressort de charge 34.

Lorsque la charge augmente, le ressort de maintien 38 se comprime jusqu'à la charge prédéterminée à laquelle la bague 40 bute contre le plateau 30.

Au-delà de ladite charge prédéterminée, le ressort de charge 34 se comprime. Le ressort de tare 32 et le ressort de charge 34 contribuent alors tous les deux à la suspension verticale entre le châssis 12 et la boîte d'essieu 16.

Dans le bogie décrit ci-dessus, l'ensemble formé par le ressort de charge 34, la bague 40 et le ressort de maintien 38 assurent la progressivité de la raideur à partir d'une charge prédéterminée, tout en réduisant fortement les vibrations parasites du ressort de charge 34 en deçà de cette charge.

Les chocs entre le ressort de charge 34 et le plateau 30 sont réduits, voire supprimés, par le ressort de maintien 38 et la bague 40 qui jouent le rôle de filtre, sans modifier significativement la raideur globale de la suspension primaire 18.

Le bruit généré au sein la suspension primaire 18 est ainsi fortement réduit et le ressort de charge 34 et le plateau 30 présentent une durée de vie allongée.

De plus, la suspension primaire 18 est compacte, l'ensemble formé par le ressort de charge 34, la bague 40 et le ressort de maintien 38 étant logé à l'intérieur du ressort de tare 32.

En variante non représentée, les ressorts de charge 34 et de maintien 38 sont inversés.

## Revendications

1. Bogie (10) de véhicule ferroviaire comprenant un châssis (12), au moins une roue (14) montée mobile en rotation sur une boîte d'essieu (16) et au moins une suspension primaire (18) disposée entre le châssis (12) et la boîte d'essieu (16), la suspension primaire (18) étant agencée pour autoriser un débattement du châssis (12) par rapport à la boîte d'essieu (16) selon une direction d'élévation, la suspension primaire (18) comprenant :
- un ressort de tare (32) hélicoïdal d'axe (A-A) sensiblement parallèle à la direction d'élévation, le ressort de tare (32) étant comprimé entre le châssis (12) et la boîte d'essieu (16) ;
- un ressort de charge (34) hélicoïdal logé à l'intérieur du ressort de tare (32) et de même axe (A-A), le ressort de charge (34) étant disposé entre le châssis (12) et la boîte d'essieu (16) ; et
- un plot (31) s'étendant selon l'axe (A-A) depuis l'un du châssis (12) et de la boîte d'essieu (16) ;
**caractérisé en ce que** la suspension primaire (18) comprend en outre :
- un ressort de maintien (38) hélicoïdal logé à l'intérieur du ressort de tare (32) et de même axe (A-A) que le ressort de tare (32) et le ressort de charge (34) ; et
- une bague (40) montée coulissante le long du plot (31), la bague (40) étant enserrée entre le ressort de charge (34) et le ressort de maintien (38), l'empilement constitué du ressort de charge (34), de la bague (40) et du ressort de maintien (38) étant comprimé entre le châssis (12) et la boîte d'essieu (16).

2. Bogie (10) selon la revendication 1, dans lequel la bague (40) présente un collet périphérique (98) en saillie radialement, le ressort de charge (34) et le ressort de maintien (38) prenant appui d'un côté et de l'autre du collet périphérique (98).

3. Bogie (10) selon la revendication 2, dans lequel la bague (40) présente des diamètres extérieurs différents de part et d'autre du collet périphérique (98).

4. Bogie (10) selon l'une quelconque des revendications précédentes, dans lequel la bague (40) présente un alésage traversant (79) dans la surface duquel la bague (40) présente au moins une gorge (90) périphérique dans laquelle est disposé un segment (92), chaque segment (92) étant en contact avec le plot (31).

5. Bogie (10) selon la revendication 4 prise avec la revendication 2 ou 3, dans lequel la bague (40) comporte deux segments (92) espacés axialement et le collet périphérique (98) s'étend axialement entre les deux segments (92).

6. Bogie (10) selon l'une quelconque des revendications précédentes, dans lequel la bague (40) porte au moins un joint (94) en contact avec le plot (31).

7. Bogie (10) selon l'une quelconque des revendications précédentes, dans lequel la bague (40) comporte une butée d'appui (80) axial autour du plot (31), le ressort de maintien (38) étant compressible jusqu'à l'appui de la butée d'appui (80) contre une surface complémentaire ménagée autour du plot (31).

8. Bogie (10) selon l'une quelconque des revendications précédentes, dans lequel il comporte un plateau (30) solidaire autour du plot (31), le plateau (30) comprenant un centreur externe (46) et un centreur interne (48) concentriques, une extrémité du ressort de maintien (38) étant agencée dans un logement (64) ménagé entre le centreur externe (46) et le centreur interne (48).

9. Bogie (10) selon l'une quelconque des revendications précédentes, dans lequel le ressort de maintien (38) présente une raideur comprise entre 0,01 % et 5,00 % de la raideur du ressort de charge (34).

10. Véhicule ferroviaire comprenant au moins un bogie (10) selon l'une quelconque des revendications précédentes.

## Patentansprüche

1. Fahrgestell (10) eines Schienenfahrzeugs, umfassend einen Rahmen (12), mindestens ein Rad (14), das beweglich in Rotation auf einem Achslager (16) montiert ist, und mindestens eine primäre Aufhängung (18), die zwischen dem Rahmen (12) und dem Achslager (16) angeordnet ist, wobei die primäre Aufhängung (18) angeordnet ist, um eine Verschiebung des Rahmens (12) mit Bezug auf das Achslager (16) gemäß einer Elevationsrichtung zu ermöglichen, wobei die primäre Aufhängung (18) Folgendes umfasst:
- eine schraubenförmige Tarafeder (32) mit der Achse (A - A), die im Wesentlichen parallel zur Elevationsrichtung ist, wobei die Tarafeder (32) zwischen dem Rahmen (12) und dem Achslager (16) komprimiert ist;
- eine schraubenförmige Lastfeder (34) im Inneren der Tarafeder (32) und mit der gleichen Achse (A - A), wobei die Lastfeder (34) zwischen dem Rahmen (12) und dem Achslager (16) angeordnet ist; und
- ein Kontaktstück (31), das sich entlang der Achse (A - A) von einem des Rahmens (12) und des Achslagers (16) erstreckt;
**dadurch gekennzeichnet, dass** die primäre Aufhängung (18) außerdem Folgendes umfasst:
- eine schraubenförmige Sicherungsfeder (38), die im Inneren der Tarafeder (32) aufgenommen ist, und mit der gleichen Achse (A - A) wie die Tarafeder (32) und die Lastfeder (34); und
- einen Ring (40), der gleitend entlang des Kontaktstücks (31) montiert ist, wobei der Ring (40) zwischen der Lastfeder (34) und der Sicherungsfeder (38) eingezwängt ist,
wobei die Stapelung, dargestellt von der Lastfeder (34), dem Ring (40) und der Sicherungsfeder (38) zwischen dem Rahmen (12) und dem Achslager (16) komprimiert ist.

2. Fahrgestell (10) nach Anspruch 1, wobei der Ring (40) einen peripheren Flanschring (98) aufweist, der radial vorspringt, wobei die Lastfeder (34) und die Sicherungsfeder (38) auf beiden Seiten des peripheren Flanschrings (98) in Auflage sind.

3. Fahrgestell (10) nach Anspruch 2, wobei der Ring (40) verschiedene Außendurchmesser auf beiden Seiten des peripheren Flanschrings (98) aufweist.

4. Fahrgestell (10) nach einem der vorhergehenden Ansprüche, wobei der Ring (40) eine Durchgangsbohrung (79) aufweist, auf deren Oberfläche der Ring (40) mindestens eine periphere Auskehlung (90) aufweist, in der ein Segment (92) angeordnet ist, wobei jedes Segment (92) in Kontakt mit dem Kontaktstück (31) ist.

5. Fahrgestell (10) nach Anspruch 4, zusammen mit Anspruch 2 oder 3, wobei der Ring (40) zwei Segmente (92) umfasst, die axial beabstandet sind, und sich der peripherere Flanschring (98) axial zwischen den zwei Segmenten (92) erstreckt.

6. Fahrgestell (10) nach einem der vorhergehenden Ansprüche, wobei der Ring (40) mindestens eine Verbindung (94) in Kontakt mit dem Kontaktstück (31) trägt.

7. Fahrgestell (10) nach einem der vorhergehenden Ansprüche, wobei der Ring (40) einen axialen Auflageanschlag (80) um das Kontaktstück (31) umfasst, wobei die Sicherungsfeder (38) bis zur Auflage des Auflageanschlags (80) gegen eine komplementäre Oberfläche, die um das Kontaktstück (31) angebracht ist, komprimiert werden kann.

8. Fahrgestell (10) nach einem der vorhergehenden Ansprüche, wobei es eine Platte (30) umfasst, die fest um das Kontaktstück (31) verbunden ist, wobei die Platte (30) eine äußere Zentriervorrichtung (46) und eine innere Zentriervorrichtung (48) umfasst, die konzentrisch sind, wobei ein Ende der Sicherungsfeder (38) in einer Aufnahme (64) angeordnet ist, die zwischen der äußeren Zentriervorrichtung (46) und der inneren Zentriervorrichtung (48) angebracht ist.

9. Fahrgestell (10) nach einem der vorhergehenden Ansprüche, wobei die Sicherungsfeder (38) eine Steifigkeit aufweist, die im Bereich zwischen 0,01 % und 5,00 % der Steifigkeit der Ladefeder (34) liegt.

10. Schienenfahrzeug, umfassend mindestens ein Fahrgestell (10) nach einem der vorhergehenden Ansprüche.

## Claims

1. A rail vehicle bogie (10) comprising a chassis (12), at least one wheel (14) mounted rotatably on a journal box (16) and at least one primary suspension (18) arranged between the chassis (12) and the journal box (16), the primary suspension (18) being arranged to allow a travel of the chassis (12) relative to the journal box (16) in an elevation direction, the primary suspension (18) comprising:
- a helical tare spring (32) with axis (A-A) substantially parallel to the elevation direction, the weighted spring (32) being compressed between the chassis (12) and the journal box (16);
- a helical helper spring (34) housed inside the tare spring (32) and with the same axis (A-A), the helper spring (34) being arranged between the chassis (12) and the journal box (16);
- a stud (31) extending along the axis (A-A) from one of the chassis (12) and the journal box (16);
**characterized in that** the primary suspension (18) further comprises:
- a helical retaining spring (38) housed inside the tare spring (32) and with the same axis (A-A) as the tare spring (32) and the helper spring (34); and
- a ring (40) mounted sliding along the stud (31), the ring (40) being gripped between the helper spring (34) and the retaining spring (38),
the stack made up of the helper spring (34), the ring (40) and the retaining spring (38) being compressed between the chassis (12) and the journal box (16).

2. The bogie (10) according to claim 1, wherein the ring (40) has a peripheral collar (98) protruding radially, the helper spring (34) and the retaining spring (38) bearing on either side of the peripheral collar (98).

3. The bogie (10) according to claim 2, wherein the ring (40) has different outer diameters on either side of the peripheral collar (98).

4. The bogie (10) according to any one of the preceding claims, wherein the ring (40) has a through bore (79) in the surface of which the ring (40) has at least one peripheral groove (90) in which a segment (92) is arranged, each segment (92) being in contact with the stud (31).

5. The bogie (10) according to claim 4 taken with claim 2 or 3, wherein the ring (40) includes two segments (92) spaced axially apart and the peripheral collar (98) extends axially between the two segments (92).

6. The bogie (10) according to any one of the preceding claims, wherein the ring (40) bears at least one seal (94) in contact with the stud (31).

7. The bogie (10) according to any one of the preceding claims, wherein the ring (40) includes an axial bearing stop (80) around the stud (31), the retaining spring (38) being compressible until the bearing stop (80) bears against a complementary surface arranged around the stud (31).

8. The bogie (10) according to any one of the preceding claims, wherein it includes a plate (30) secured around the stud (31), the plate (30) comprising an outer centering device (46) and an inner centering device (48) that are concentric, one end of the retaining spring (38) being arranged in a housing (64) positioned between the outer centering device (46) and the inner centering device (48).

9. The bogie (10) according to any one of the preceding claims, wherein the retaining spring (38) has a stiffness comprised between 0.01% and 5.00% of the stiffness of the helper spring (34).

10. A rail vehicle comprising at least one bogie (10) according to any one of the preceding claims.
